# EUROPÄISCHE PATENTSCHRIFT

(11) **EP 2 798 988 B1**
(45) Veröffentlichungstag und Bekanntmachung des Hinweises auf die Patenterteilung: **18.05.2016**
(21) Anmeldenummer: 14164131.6
(22) Anmeldetag: 10.04.2014
(51) Int. Cl.: A47J 31/44

(54) **Vorrichtung zum Erzeugen eines Milchschaumes**
Device for producing a milk foam
Dispositif de production d'une mousse de lait

(30) Priorität: 29.04.2013 DE 102013104338
(43) Veröffentlichungstag der Anmeldung: 05.11.2014
(73) Patentinhaber: Melitta Professional Coffee Solutions GmbH & Co., KG, 32429 Minden (DE)
(72) Erfinder: Buchholz, Bernd, 32369 Rahden (DE); Diester, Thomas, 31675 Bückeburg (DE)
(74) Vertreter: Specht, Peter

(56) Entgegenhaltungen:
- EP-A1- 2 471 423
- EP-A2- 2 036 472
- WO-A1-03/086601
- DE-A1- 4 213 895

## Beschreibung

Die Erfindung betrifft eine Vorrichtung zum Erzeugen eines Milchschaumes sowie ein Verfahren zum Erzeugen des Milchschaumes.

Die Herstellung von Milchschaum, das ist ein Gemisch aus Milch und Luft sowie gegebenenfalls Wasser, ist aus dem Stand der Technik in verschiedensten Ausführungsformen bekannt. Sie bildet in der Regel einen Teil eines Kaffeevollautomatens. Bei bekannten Kaffeevollautomaten ist die Konsistenz des Milchschaums, und hier in erster Linie die Ausbildung der Luftblasen, oftmals sehr unregelmäßig.

Stand der Technik Dokumente sind: EP 2 471 423, WO 03/086601, DE 4 213 185.

Die Erfindung hat die Aufgabe, ein Verfahren und eine Vorrichtung zum Erzeugen von Milchschaum zu schaffen, mit denen dieses Problem verringert wird.

Die Erfindung löst diese Aufgabe in Hinsicht auf die Vorrichtung durch die Gegenstände der unabhängigen Ansprüche 1 und 12, und in Hinsicht auf das Verfahren durch den Gegenstand des unabhängigen Anspruchs 13. Vorteilhafte Ausführungsformen sind in den Unteransprüchen genannt.

Durch den in diesen Ansprüchen genannten Homogenisator kann der erzeugte Milchschaums vorteilhaft vergleihmässigt werden.

Nach einer besonders bevorzugten Variante wird zur Nachbehandlung des Milchschaumes ein Homogenisator geschaffen, der zum Verkleinern der Luftblasen eines Milchschaumes im Sinne einer Luft-/Milchemulsion bzw. eines Milch-Luftgemisches vorgesehen ist. Ein solches Milch-/Luftgemisch umfasst eine definierte Menge Milch, der eine definierte Menge Luft zugeführt ist. Optional enthält ein solches Milch-/Luftgemisch zudem eine definierte Menge (Heiß-)Dampf (Wasser). Mit dem Homogenisator ist die Konsistenz eines Milchschaumes optimierbar. Sie ist insbesondere - durch Variation des Druckes am Eingang - die Konsistenz des Milchschaumes von fein, d. h. mit sehr kleinen Luftblasen, bis grob, d. h. mit großen Luftblasen, und von locker über cremig bis fest veränderbar.

Der Homogenisator ist bevorzugt für einen Heißgetränkeautomaten, besonders bevorzugt für einen Kaffeevollautomaten, vorgesehen. Er weist bevorzugt einen Verkleinerungsbereich auf, in dem eine Vielzahl von Prallkörpern angeordnet ist. Zwischen den Prallkörpern erstreckt sich ein Kanallabyrinth, welches vorgesehen ist, um von dem Milch-/Luftgemisch durchströmt zu werden.

Das Milch-/Luftgemisch wird in Teilströmen durch das Kanallabyrinth gedrückt. Dafür sind bevorzugt mehrere Prallkörper nebeneinander in einer Reihe angeordnet. Weiterhin bevorzugt weisen die Prallkörper dafür jeweils eine Prallfläche auf, auf die die Teilströme des Milchschaumes jeweils beim Durchströmen des Kanallabyrinthes aufprallen. Beim Aufprall teilen sich die Teilströme, und die Luftblasen werden zerteilt. Dadurch entstehen kleinere Luftblasen.

Zudem ist es bevorzugt, dass der Homogenisator in seiner Erstreckungsrichtung, die die Strömungsrichtung des Milchschaumes ist, mehrere untereinander angeordnete Reihen mit Prallkörpern aufweist. Dadurch prallen die Teilströme jeweils auf die Prallkörper der in Erstreckungsrichtung untereinander angeordneten Reihen auf, so dass die Luftblasen mehrfach verkleinert werden.

Bevorzugt sind die mehreren Prallkörper derselben Reihe jeweils voneinander beabstandet, so dass zwischen ihnen ein Kanal ausgebildet ist. Weiterhin bevorzugt sind die mehreren Prallkörper benachbarter Reihen zueinander versetzt angeordnet. Dadurch ist die Prallfläche der Prallkörper einer Reihe in Erstreckungsrichtung jeweils unterhalb des Kanals angeordnet, der zwischen zwei einander benachbarten Prallkörpern derselben in Erstreckungsrichtung darüber angeordneten Reihe angeordnet ist. Ein solcher Kanal führt daher Teile der beiden Teilströme, die an den Prallflächen der ihn begrenzenden Prallkörper auftreffen, zusammen. In jedem Kanal werden jeweils Teile dieser Teilströme daher wieder durchmischt und aus ihnen jeweils ein neuer Teilstrom gebildet.

Vorzugsweise - aber nicht zwingend - sind die Prallkörper einander benachbarter Reihen mittig zueinander versetzt. Dadurch verlaufen die Kanäle jeweils mittig der Prallkörper der benachbarten oberen und/oder unteren Reihe. Bei dieser Ausbildung wird ein neuer Teilstrom jeweils durch etwa die Hälften der beiden Teilströme gebildet, die an den Prallflächen der ihn begrenzenden Prallkörper auftreffen.

Es ist bevorzugt, dass der Aufprallraum den zwischen zwei Prallkörpern angeordneten Kanal der in Erstreckungsrichtung oberen Reihe mit den beiden Kanälen der in Erstreckungsrichtung unteren Reihe verbindet, die an den Prallkörper angrenzen, der die Prallfläche unterhalb des Aufprallraums aufweist. Dadurch werden die durch die Kanäle fließenden Teilströme im Aufprallraum geteilt und in den unmittelbar nachfolgenden Kanälen werden jeweils benachbarte geteilte Teilströme wieder durchmischt.

Besonders bevorzugt sind die Prallkörper an ihrem in Erstreckungsrichtung unteren Ende sich verjüngend, beispielsweise dreieckförmig, ausgebildet. Dadurch kann der Aufprallraum leicht gereinigt werden und es wird das Ansetzen von Verschmutzungen verhindert.

In einer bevorzugten Ausführungsform erstreckt sich der Homogenisator konzentrisch um eine Achse. Bei dieser Ausführungsform kann das Milch-/Luftgemisch gleichmäßig um die Achse verteilt in den Homogenisator einströmen. Dadurch werden beim Einströmen des Milchschaumes in die zwischen den Prallkörpern gebildeten Kanäle etwa gleich große Teilströme gebildet. Diese Ausführungsform ist zudem sehr platzsparend und erfordert nur eine einzige Einlassöffnung. In Abhängigkeit vom zur Verfügung stehenden Bauraum ist aber auch ein sich entlang einer Ebene erstreckender oder anders geformter Homogenisator bevorzugt.

Bei dem sich konzentrisch um die Achse erstreckenden Homogenisator ist es bevorzugt, dass die mehreren Prallkörper jeder Reihe jeweils in Umfangsrichtung gleichmäßig verteilt um die Achse angeordnet sind. Besonders bevorzugt ist die Anzahl der Prallkörper aller Reihen jeweils gleich, so dass die Teilströme gleichmäßig homogenisiert werden.

Um den Dichtsitz durch einen sauberen Kegelsitz zu optimieren und vorzugsweise auch, um die Geschwindigkeit des Milchschaumes beim Durchströmen durch das Kanallabyrinth zu beschleunigen, ist es bevorzugt, dass sich der Homogenisator in Erstreckungsrichtung verjüngt. Er weist daher im Verkleinerungsbereich eine konische Form auf. Am in Erstreckungsrichtung oberen, breiteren Ende des Verkleinerungsbereiches werden dadurch große Luftblasen beim Aufprall auf die Prallflächen zerteilt. Am in Erstreckungsrichtung unteren, schmaleren Ende des Verkleinerungsbereiches werden aufgrund der Beschleunigung des Milch-/Luftgemisches sowie der verkleinerten Flächenverhältnisse auch kleinere Luftblasen zerteilt.

Zudem wird das Milch-/Luftgemisch in Erstreckungsrichtung des Homogenisators immer weiter durchmischt. Die Intensität der Homogenisierung ist daher durch Wahl der Länge des Homogenisators einstellbar.

Der Homogenisator weist weiterhin bevorzugt einen Einlassbereich auf, in dem er kegelstumpfförmig ausgebildet ist und sich in Erstreckungsrichtung verbreitert. Dadurch weist er eine Rampe auf, und das Milch-/Luftgemisch verteilt sich gleichmäßig in Umfangsrichtung um die Rampe. Beim Einströmen in den Verkleinerungsbereich umfassen die Teilströme daher immer etwa dieselbe Menge des Milchschaumes. Dadurch wird das Milch-/Luftgemisch sehr gleichmäßig homogenisiert und weist eine gleichbleibende Konsistenz auf.

Zudem weist der Homogenisator bevorzugt einen Auslassbereich auf, in dem er kegelstumpfförmig ausgebildet ist und sich in Erstreckungsrichtung verjüngt. Dadurch wird das Milch-/Luftgemisch im Auslassbereich nochmals beschleunigt. Bevorzugt wird das homogenisierte Milch-/Luftgemisch ohne einen Rückstau aus dem Homogenisator ausgelassen.

Die Homogenisierung des Milchschaumes erfolgt daher, indem einerseits die Luftblasen mit der Milch stärker vermengt werden, und zwar indem das Milch-/Luftgemisch in Teilströme zerteilt und diese wieder miteinander vermischt werden. Und andererseits werden die Luftblasen gleichzeitig zerteilt, indem die Teilströme mit einer Aufprallenergie auf die Prallflächen aufprallen.

Der Homogenisator ist bevorzugt ein Bestandteil einer Nachbearbeitungsvorrichtung für ein Milch-/Luftgemisch, mit dem eine Nachbearbeitung des Milchschaumes, insbesondere abschließend, durchgeführt wird. Dabei kann sowohl ein kaltes Milch-/Luftgemisch, als auch ein warmes Milch-/Luftgemisch mit der Nachbearbeitungsvorrichtung nachbearbeitet werden. Prinzipiell ist die Anordnung der Nachbearbeitungsvorrichtung auch vor einer Vorrichtung zum Erwärmen des Milchschaumes möglich, was aber weniger bevorzugt wird.

Es ist bevorzugt, dass die Nachbearbeitungsvorrichtung ein Gehäuse mit einem Gehäuseoberteil mit sowie einem Gehäuseunterteil aufweist. Der Homogenisator ist bevorzugt im Gehäuseunterteil angeordnet.

Besonders bevorzugt ist der Homogenisator formschlüssig im Gehäuseunterteil angeordnet. Bei dieser Ausführungsform wird der beim Einlass des Milchschaumes in die Nachbearbeitungsvorrichtung von diesem auf den Homogenisator wirkende Druck genutzt. Bei sich verjüngendem Homogenisator und einem korrespondierend dazu ausgebildeten Gehäuseunterteil wird der Homogenisator im Gehäuseunterteil durch den Druck zentriert und an eine Gehäuseinnenwand des Gehäuseunterteils gedrückt. Bevorzugt sind die Gehäuseinnenwand und der Homogenisator korrespondierend zueinander ausgebildet, so dass der Homogenisator in einem Presssitz an der Gehäuseinnenwand angeordnet ist. Durch den Presssitz kann das Milch-/Luftgemisch nicht zwischen der Gehäuseinnenwand und dem Homogenisator vorbei fließen.

Die Nachbearbeitungsvorrichtung ist bevorzugt ein Bestandteil einer Vorrichtung zum Erzeugen eines Milchschaumes. Weiterhin bevorzugt umfasst die Vorrichtung zum Erzeugen eines Milchschaumes eine Milchpumpe zum Fördern des Milchschaumes.

Um die Konsistenz des Milchschaumes je nach erwünschtem Heißgetränk verändern zu können, ist es bevorzugt, dass die von der Milchpumpe geförderte Menge des Milchschaumes variierbar ist. Durch die veränderte Menge ist der Druck, mit dem das Milch-/Luftgemisch in die Nachbearbeitungsvorrichtung einströmt, verändert. Dabei sind der Druck, mit dem das Milch-/Luftgemisch in die Nachbearbeitungsvorrichtung einströmt, und die Fließgeschwindigkeit des Milchschaumes bei einer großen von der Milchpumpe geförderten Menge groß und bei einer kleinen von der Milchpumpe geförderten Menge klein. Dadurch ist einerseits die Aufprallenergie, mit der die Teilströme jeweils auf die Prallflächen aufprallen, mit zunehmender geförderter Menge umso größer beziehungsweise mit abnehmender geförderter Menge umso kleiner. Andererseits wird das Milch-/Luftgemisch mit zunehmender geförderter Menge schneller beziehungsweise mit abnehmender geförderter Menge langsamer durch den Homogenisator gedrückt.

Es hat sich gezeigt, dass die Erhöhung der geförderten Menge Milch-/Luftgemisch bei gleichbleibendem Verhältnis von Milch zu zugeführter Luft zu einem Milchschaum mit sehr gleichmäßigen Eigenschaften führt (bei gleichbleibenden Zuführparametern, insbesondere Druck). Durch Variation des Zuführdrucks können diese verändert werden. Der Schaum ist aber jeweils ein sehr gleichmäßiger Schaum.

Bevorzugt ist die Nachbearbeitungsvorrichtung in Strömungsrichtung des Milchschaumes hinter einer Vorrichtung zum Erwärmen des Milchschaumes angeordnet. Dadurch ist die gegebenenfalls durch das Erwärmen veränderte Konsistenz des Milchschaumes mit der Nachbearbeitungsvorrichtung abschließend veränderbar beziehungsweise anpassbar. Dabei ist das Erwärmen des Milchschaumes bevorzugt optional.

Eine Vorrichtung zum Erwärmen des Milchschaumes ist beispielsweise eine Dampfzufuhr, bei der das Milch-/Luftgemisch durch Zufuhr von Heißdampf erwärmt wird. Prinzipiell sind auch andere Vorrichtungen zum Erwärmen des Milchschaumes verwendbar.

Es hat sich gezeigt, dass die abschließende Nachbehandlung mit dem Homogenisator, die die mit der Milchpumpe geförderte Menge des Milchschaumes und die mit der Vorrichtung zum Erwärmen bewirkte Veränderung des Milchschaumes berücksichtigt, einen sehr weiten Stellbereich schafft, mit dem die Konsistenz reproduzierbar einstellbar ist, wobei die Qualität des Milchschaumes sehr gut ist, und wobei die Temperatur des Milchschaumes in einem weiten Temperaturbereich wählbar ist.

Die Aufgabe wird ebenfalls gelöst mit einem Heiß- und/oder Kaltgetränkeautomaten, der eine solche Vorrichtung zum Erzeugen eines Milchschaumes umfasst. Der Heiß- und/oder Kaltgetränkeautomat ist in einer bevorzugten Ausführungsform ein Kaffeevollautomat. Die Erfindung ist aber auch für andere Heiß- und/oder Kaltgetränkeautomaten, beispielsweise für einen Teeautomaten, einen Kakaoautomaten oder eine Kombination solcher Automaten, nutzbar. Die Nutzung der Vorrichtung zum Erzeugen eines Milchschaumes in einem solchen Heiß- und/oder Kaltgetränkeautomaten ermöglicht die Herstellung von Milch-/Luftgemischen verschiedener reproduzierbarer Konsistenz und verschiedener Temperatur je nach ausgewähltem Heiß- und/oder Kaltgetränk.

Die Aufgabe wird weiterhin gelöst mit einem Verfahren zum Homogenisieren eines Milchschaumes mit Hilfe eines Homogenisators einer Nachbearbeitungsvorrichtung, insbesondere einer Vorrichtung zum Erzeugen eines Milchschaumes, bei dem das Milch-/Luftgemisch in Teilströmen durch ein Kanallabyrinth gedrückt wird, wobei mehrfach wiederholt
- die Teilströme des Milchschaumes jeweils auf Prallflächen aufprallen, wobei sich die Teilströme sowie die Luftbläschen des Milchschaumes teilen, und
- die geteilten Teilströme dann zu neuen Teilströmen durchmischt werden.

Dabei werden jeweils benachbarte Teilströme nach dem Aufprallen auf die Prallfläche miteinander durchmischt.

Das Milch-/Luftgemisch wird beim Durchströmen des Kanallabyrinthes bevorzugt beschleunigt. Dadurch können auch kleine Luftblasen noch zerteilt werden.

Es ist bevorzugt, dass das Milch-/Luftgemisch dabei mit einem definierten Volumenstrom in den Homogenisator einfließt. Dadurch können mit demselben Homogenisator verschiedene Konsistenzen des Milchschaumes erzielt werden.

Mit dem Verfahren ist die Konsistenz des Milchschaumes daher anpassbar. Dabei ist in Abhängigkeit von dem eingestellten Volumenstrom ein Milchschaum von moussig bis fest erzielbar.

Nachfolgend wird die Erfindung unter Bezug auf die Zeichnung anhand eines Ausführungsbeispiels näher beschreiben. Es zeigt:
- Fig. 1: eine schematische Darstellung des Aufbaus einer Vorrichtung zum Aufschäumen von Milch;
- Fig. 2: eine Nachbehandlungsvorrichtung zum Verändern der Konsistenz des Milchschaums; und
- Fig. 3: einen Homogenisator der Nachbehandlungsvorrichtung.

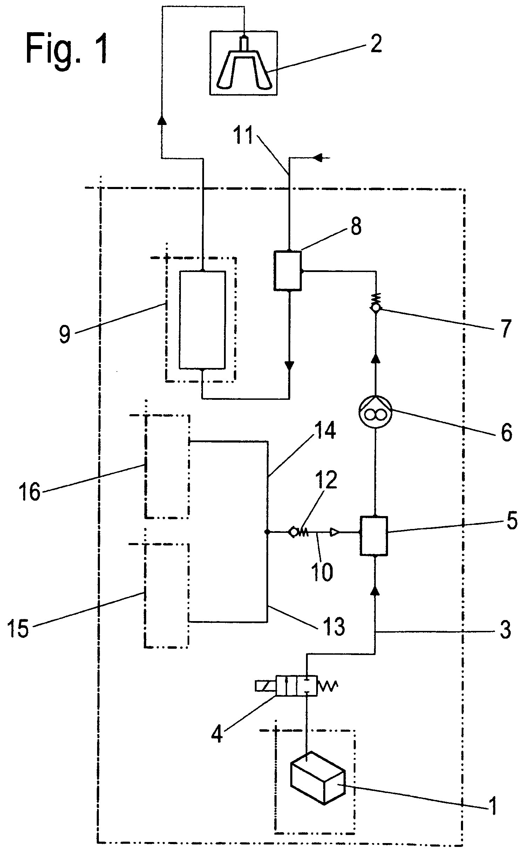

Fig. 1 zeigt eine Vorrichtung zum Erzeugen eines Milchschaumes. Im Folgenden werden die Begriffe Milch-/Luftgemisch 40 und Milchschaum sowie Luft-/Milchemulsion synonym verwendet. Die Vorrichtung weist vorzugsweise folgenden Aufbau auf.

Eine Milchleitung 3 verbindet einen Milchbehälter 1 und eine Auslassvorrichtung 2 miteinander. Die Auslassvorrichtung 2 ist als Auslauf ausgebildet. Im Folgenden werden die Begriffe Auslassvorrichtung 2 und Auslauf synonym verwendet. Dabei sind in die Milchleitung 3 zwischen dem Milchbehälter 1 und dem Auslauf 2 in dieser Reihenfolge hier folgende Komponenten geschaltet:
ein Absperrventil 4, eine erste Mischkammer 5, eine Milchpumpe 6, ein erstes Rückschlagventil 7, eine zweite Mischkammer 8 und eine Nachbehandlungsvorrichtung 9.

In die erste Mischkammer 5 mündet ferner eine Zuleitung 10, in die ein zweites Rückschlagventil 12 geschaltet ist, wobei sich die Zuleitung 11 vor dem zweiten Rückschlagventil 12 in zwei Zweigleitungen 13, 14 verzweigt.

Beide Zweigleitungen 13, 14 sind mit einer Luftquelle 15, 16 (einen atmosphärisch offenen Zugang, einer Luftpumpe oder einem Druckbehälter oder dgl.) verbunden.

In die zweite Mischkammer 8 mündet ferner eine Dampfzuleitung 11, durch die Heißdampf aus einer Heißdampfquelle (hier nicht dargestellt) in die Milchleitung 3 geleitet werden kann.

Die Funktion dieser Vorrichtung ist wie folgt.

Mittels der in die Milchleitung 3 geschalteten Milchpumpe 6 wird Milch (insbesondere mit einem Fettgehalt von weniger als 10%, vorzugsweise weniger als 7,5%) aus dem Milchbehälter 1 zum Auslauf 2 gefördert. Dieses Fördern erfolgt vorzugsweise während der Dauer der Milchschaumherstellung kontinuierlich.

Dabei wird das Absperrventil 4 zunächst von der dargestellten Sperrstellung in seine Durchlassstellung geschaltet.

Die Milch wird sodann aus dem Milchbehälter 1 in und durch die erste Mischkammer 5 gefördert. In der ersten Mischkammer 5 - in einfacher Form beispielsweise nach Art eines T-Stückes mit einer im Durchmesser vergrößerten Mischkammerbereich ausgestaltet (hier nicht dargestellt) - wird in die durch die Milchleitung 3 strömende Milch Luft geleitet, derart, dass sich die Milch mit der zuströmenden Luft zu einem schaumartigen Milch-/Luftgemisch 40 bzw. einer Luft-/Milchemulsion vermischt. Das Milch-/Luftgemisch 40 ist emulsionsartig ausgebildet, so dass in der Milch Luftbläschen 41 eingeschlossen sind.

Vorzugsweise sind in die Zweigleitung 10 Vorrichtungen wie ein Absperrventil, eine oder mehrere Drosseln und/oder dgl. geschaltet, um die Luftzufuhr zu definieren, starten und unterbrechen zu können. Eine feste Drossel bietet den Vorteil, dass stets eine genau definierte Luftmenge zugegeben wird. Drosseln sind dem Fachmann an sich bekannt und werden daher hier nicht dargestellt). Es ist denkbar, zwischen zwei Drosseln bzw. Drosselkonfigurationen die Luftzufuhr umschalten zu können (insbesondere für kalten oder warmen Milchprodukt).

Vorzugsweise wird in die durch die erste Mischkammer 5 strömende Milch während der Milchschaumerzeugung kontinuierlich eine konstante Menge Luft gesaugt, um ein Milch-/Luftgemisch 40 möglichst gleichbleibender Eigenschaft zu erzeugen.

Das in der ersten Mischkammer erzeugte Milch-/Luftgemisch 40 wird durch die Milchpumpe 6 gefördert, in welcher sie verdichtet wird. Vorzugsweise wird eine hinsichtlich der Fördermenge einstellbare Milchpumpe 6 verwendet.

Das aus der Milchpumpe 6 aus- und weiterströmende, verdichtete Milch-/Luftgemisch 40 wird durch eine Strecke, in welcher die zweite Mischkammer 8 zwischen geschaltet ist, gefördert. In der zweiten Mischkammer 8, die beispielsweise nach Art eines T-Stückes ausgebildet ist, wird der Milch-/Luftgemisch 40 optional aus der Leitung 11 zuströmender Heißdampf zugesetzt, um die Temperatur des Milch-Luft-Gemisches zu erhöhen und einen erwärmten Milchschaum 40 zu erzeugen. Dabei ist die Menge des zuströmenden Heißdampfes bevorzugt konstant. Denkbar ist es aber auch, sie zu verändern, um den Grad der Erwärmung des Milchschaumes 40 anpassen zu können.

An die zweite Mischkammer 9 schließt sich ein Dekompressionsabschnitt der Milchleitung 3 an, der in die Nachbehandlungsvorrichtung 9 mündet.

Das aus der zweiten Mischkammer 8 und dem Dekompressionsabschnitt ausströmende erwärmte Milch-/Luftgemisch 40 könnte zwar bereits in ein Gefäß ausgegeben werden. Dies ist hier aber nicht der Fall. Sondern sie wird zunächst in der Nachbehandlungsvorrichtung 9 nachbehandelt, um die Schaumqualität gezielt zu verändern.

Vorzugsweise weist die Nachbehandlungsvorrichtung 9 einen Homogenisator 95 auf, der dazu vorgesehen ist, dass der Milchschaum 40 homogenisiert wird, so dass die Luftbläschen 41 verkleinert und gleichmäßiger in der Milch verteilt sind. Dieses Nachbehandeln erfolgt vorzugsweise derart, dass der Milchschaum 40 sowie die Luftbläschen 41 zumindest einmal oder wiederholt auf Prallflächen 971 auftreffen.

Die Art und Intensität der Nachbehandlung ist dabei besonders von der Förderleistung bzw. der Drehzahl der Milchpumpe 6 abhängig, also von dem Druck, mit welchem die Milchpumpe 6 den Milchschaum 40 in die Nachbehandlungsvorrichtung 9 hineinpumpt. Derart ist es möglich, die Milchschaumeigenschaften wesentlich über die Fördermenge der Milchpumpe 6 zu beeinflussen, um verschiedene Schaumqualitäten zu erzeugen (beispielsweise in Hinsicht auf die Bläschengröße), die für verschiedene Kaffeespezialitäten wie Cappuccino oder Milchkaffee oder dgl. jeweils besonders geeignet sind.

Aus der Nachbehandlungsvorrichtung 9 wird der homogenisierte Milchschaum 40 durch den Auslauf 2 in ein Gefäß (nicht gezeigt), beispielsweise in eine Tasse, ausgegeben.

Derart quasi im kontinuierlichen Betrieb erzeugter Milchschaum 40 weist eine einstellbare Schaumbeschaffenheit auf. So können erfindungsgemäß Milchschäume verschiedener Konsistenz erzeugt werden, die von sehr fein (mit sehr kleinen Luftbläschen 41) bis grob (mit im Vergleich dazu großen Luftbläschen 41), und von locker über cremig bis fest variieren.

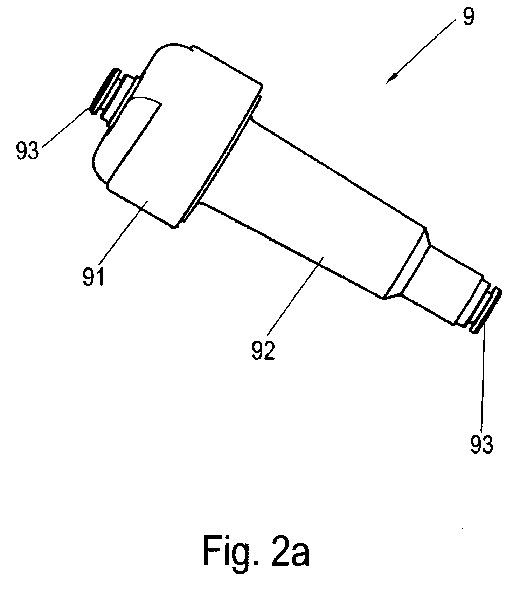

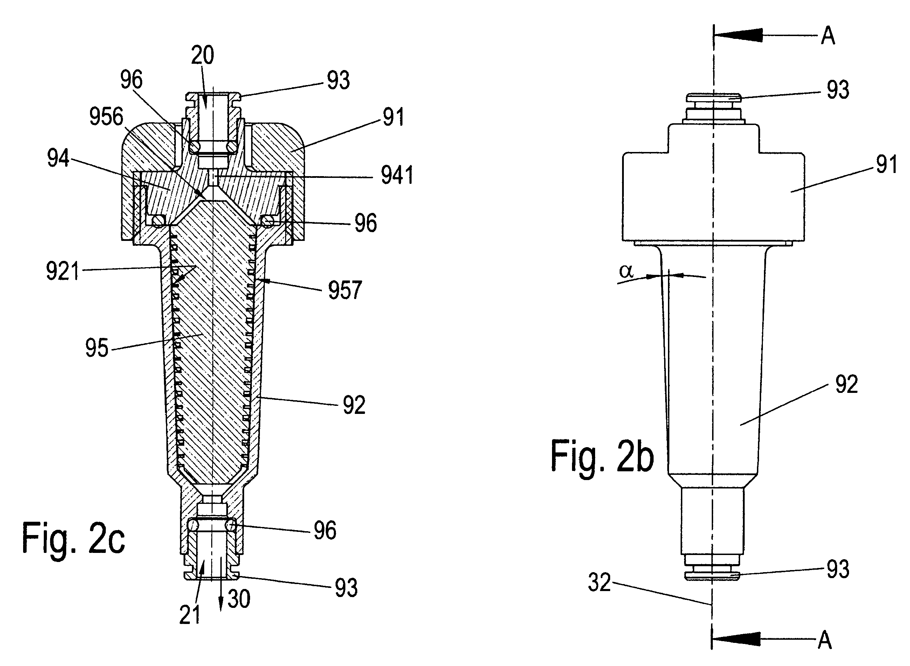

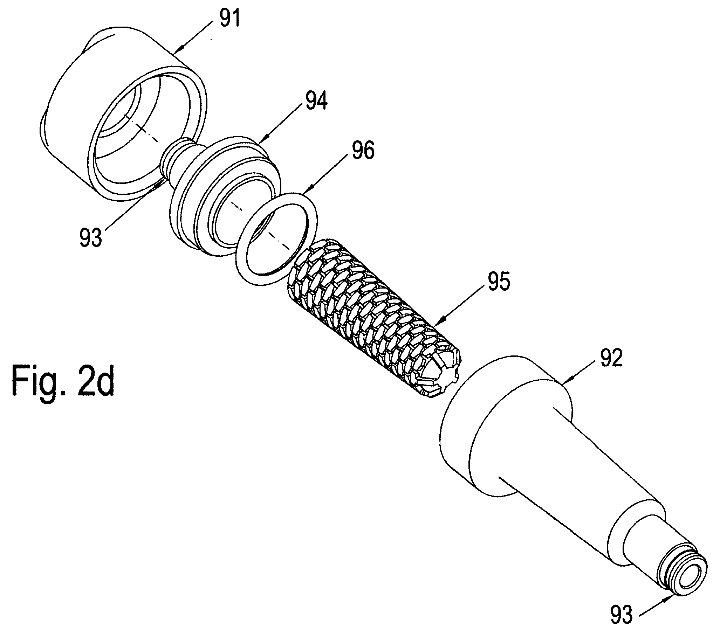

Fig. 2 zeigt die Nachbehandlungsvorrichtung 9 in verschiedenen Ansichten. In Fig. 2 (a) ist eine perspektivische Ansicht gezeigt, in Fig. 2(b) eine Seitenansicht, in Fig. 2 (c) ein Schnitt A-A durch die Darstellung der Fig. 2 (b) und in Fig. 2(d) eine Explosionsansicht.

Die Nachbehandlungsvorrichtung 9 weist ein Gehäuse auf, das sich konzentrisch um eine Achse 30 erstreckt und aus einem Gehäuseoberteil 91 und einem Gehäuseunterteil 92 gebildet ist. Im Gehäuseunterteil 92 ist der Homogenisator 95 angeordnet. Im Gehäuseoberteil 91 ist ein Oberteil 94 mit einer Düse 941 vorgesehen. Das Gehäuseoberteil 91 sowie das Oberteil 94 weisen eine Durchgangsbohrung (nicht bezeichnet) auf, wobei im Oberteil 94 ein Anschlusseinsatz 93 vorgesehen ist, der als Einlassöffnung 20 für das Milch-/Luftgemisch 40 dient. Das Milch-/Luftgemisch 40 wird durch die Einlassöffnung 20 und die Düse 941 zum Homogenisator 95 geführt.

Durch den Druck, den das Milch-/Luftgemisch 40 auf den Homogenisator 95 ausübt, wird dieser gegen eine Gehäuseinnenwand 921 des Gehäuseunterteils 92 gedrückt. Dabei weist der Homogenisator 95 eine konische Form auf, so dass er sich in Erstreckungsrichtung 30 verjüngt. Und zwar weist er eine Außenwand 957 auf, die einen Winkel α von etwa 1 °- 5°, vorzugsweise 2°, zur Achse 32 aufweist. Hierdurch wird eine gute Dichtwirkung erreicht. Zudem wird das Milch-/Luftgemisch 40 beim Durchfließen des Homogenisators 95 beschleunigt.

Zudem weisen das Gehäuseunterteil 92 und seine Gehäuseinnenwand 921 eine zum Homogenisator 95 korrespondierende Form auf, und sind daher ebenfalls konisch geformt. Daher wird der Homogenisator 95 durch den vom Milch-/Luftgemisch 40 auf ihn wirkenden Druck zentriert und an die Gehäuseinnenwand 921 gepresst, so dass er formschlüssig an dieser anliegt. Daher kann das Milch-/Luftgemisch 40 nicht zwischen der Gehäuseinnenwand 921 und der Außenwand 957 des Homogenisators 95 vorbei fließen.

Die Außenwand 957 des Homogenisators 95 ist mit einem Kanallabyrinth 98 durchsetzt, durch das das Milch-/Luftgemisch 40 gedrückt wird. Dabei wird es homogenisiert, d. h. die Luftblasen im Milch-/Luftgemisch 40 werden verkleinert und gleichmäßig im Milch-/Luftgemisch 40 verteilt.

Nach dem Durchfließen des Homogenisators 95 wird das homogenisierte Milch-/Luftgemisch 40 durch eine Auslassöffnung 21 in einem Anschlusseinsatz 93, der in einer Durchgangsbohrung (nicht bezeichnet) des Gehäuseunterteils 92 angeordnet ist, aus der Nachbearbeitungsvorrichtung 9 ausgelassen.

Der einlassseitige Anschlusseinsatz 93 ist gegenüber dem Oberteil 94, das Oberteil 94 gegenüber dem Gehäuseunterteil 92 und der auslassseitige Anschlusseinsatz 93 gegenüber dem Gehäuseunterteil 92 mit Dichtringen 96 abgedichtet, so dass das Milch-/Luftgemisch 40 nicht in Zwischenräume (nicht bezeichnet) der Nachbearbeitungsvorrichtung 9 entweichen kann.

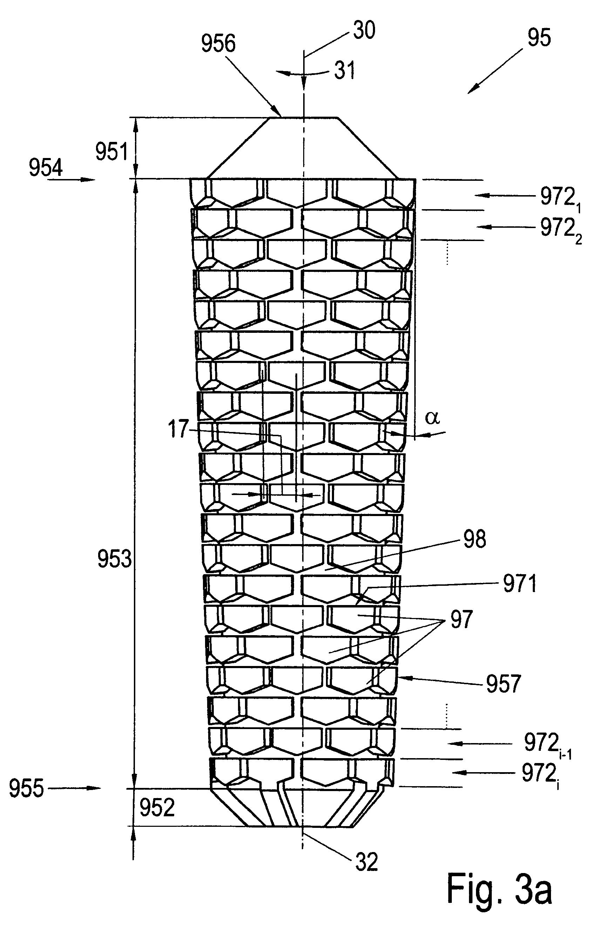

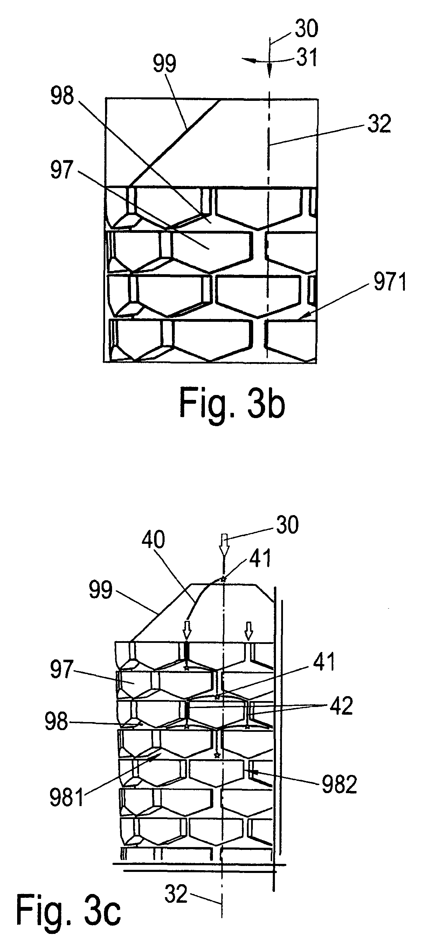

Die Fig. 3 zeigt in (a) eine detaillierte Seitenansicht des Homogenisators und in (b) und (c) jeweils einen Ausschnitt aus dem Homogenisator der Fig. 3(a).

Der Homogenisator 95 weist einen Einlassbereich 951 auf, der kegelstumpfförmig ausgebildet ist und sich daher in Erstreckungsrichtung 30 konisch verbreitert. Am einlassseitigen stumpfen Ende ist eine Eintrittsfläche 956 vorgesehen, auf die das Milch-/Luftgemisch 40 beim Einlassen auftrifft. Dann verteilt sich das Milch-/Luftgemisch 40 in Umfangsrichtung 31 gleichmäßig um eine durch die konische Form gebildete Rampe 99.

An den Einlassbereich 951 schließt sich ein Verkleinerungsbereich 953 an. Der Verkleinerungsbereich 953 weist die mit dem Kanallabyrinth 98 durchsetzte Außenwand 957 auf. Er ist ebenfalls konisch geformt, verjüngt sich aber in Erstreckungsrichtung 30.

An den Verkleinerungsbereich 953 schließt sich ein Auslassbereich 952 an, in dem der Homogenisator 95 kegelstumpfförmig geformt ist und sich noch weiter in Erstreckungsrichtung 30 verjüngt.

Im Verkleinerungsbereich 953 sind Prallkörper 97 vorgesehen, zwischen denen sich das Kanallabyrinth 98 erstreckt. Die Prallkörper 97 weisen jeweils eine Prallfläche 971 auf, auf die Teilströme 42 des Milchschaumes 40 jeweils beim Durchströmen des Kanallabyrinthes 98 aufprallen. An einer der Prallfläche 971 gegenüber liegenden Seite, das ist die in Erstreckungsrichtung 30 untere Seite der Prallkörper 97, verjüngen sich die Prallkörper 97 jeweils. In der hier gezeigten Ausführungsform sind die Prallkörper 97 dort dreieickförmig ausgebildet.

Es sind jeweils mehrere Prallkörper 97 in Umfangsrichtung 31 gleichmäßig verteilt nebeneinander in einer Reihe 972₁, 972₂ - 972ᵢ angeordnet. Zudem sind in Erstreckungsrichtung 30 untereinander mehrere Reihen 972₁, 972₂ - 972ᵢ mit Prallkörpern 97 vorgesehen. Die Prallkörper 97 derselben Reihe 972₁, 972₂ - 972ᵢ sind jeweils voneinander beabstandet, so dass zwischen ihnen ein Kanal 982 ausgebildet ist. Zudem sind die Prallkörper 97 der Reihen 972₁, 972₂ - 972ᵢ jeweils mittig zueinander versetzt. Der Versatz ist mit einem Doppelpfeil 17 gezeigt. Dadurch ist die Prallfläche 971 eines Prallkörpers 97 jeweils unterhalb eines Kanals 982 angeordnet.

Zudem ist dadurch jeweils oberhalb eines Prallkörpers 971 ein Aufprallraum 981 gebildet, der etwa dreieckförmig ausgebildet ist, und den Kanal 982 oberhalb der Prallfläche 971 des Prallkörpers 97 mit den beiden seitlich an den Prallkörper 97 angrenzenden Kanälen 982 verbindet.

Das Kanallabyrinth 98 umfasst daher eine Vielzahl von Aufprallräumen 981, die durch die Kanäle 982 miteinander verbunden sind.

Ein die Nachbearbeitungsvorrichtung 9 durchfließendes Milch-/Luftgemisch 40 tritt an der einlassseitigen oberen Seite 954 des Verkleinerungsbereiches 953 durch die zwischen den Prallkörpern 97 der in Erstreckungsrichtung 30 obersten Reihe 972₁ in das Kanallabyrinth 98 ein. Dabei wird es in etwa gleichgroße Teilströme 42 geteilt, die jeweils einen der Kanäle 982 der obersten Reihe 972₁ durchfließen.

Die Teilströme 42 treffen jeweils auf die unterhalb des Kanals 82 angeordnete Prallfläche 971 auf. Dabei werden nicht nur die Teilströme 42, sondern vor allem auch die Luftbläschen 41 geteilt. Die geteilten Teilströme 42 fließen dann jeweils durch die seitlich der Prallkörper 97, auf die sie aufgeprallt sind, angeordneten Kanäle 982. Dabei durchmischen sie sich mit den jeweils benachbarten geteilten Teilströmen 42 jeweils zu einem neuen, den Kanal 982 durchfließenden Teilstrom 42. Anschließend prallt dieser auf die nachfolgende Prallfläche 971 der in Erstreckungsrichtung 30 folgenden Reihe 972₁, 972₂ - 972ᵢ auf und wird geteilt, wobei auch die Luftbläschen 41 wieder geteilt werden. Dieser Vorgang wiederholt sich solange, bis das Milch-/Luftgemisch 40 die letzte, unterste Reihe 972ᵢ des Homogenisators 95 an seinem unteren, auslassseitigen Ende 955 durchflossen hat.

Im Auslassbereich 952 und beim Auslassen durch die Auslassöffnung 21 werden die homogenisierten Teilströme 42 wieder zusammengeführt.

Die Teilströme 42 werden unter hohem Druck durch das Kanallabyrinth 98 gedrückt. Der Druck ist abhängig von der Förderleistung der Milchpumpe 6 und über diese einstellbar. Die Luftbläschen 41 treffen mit einer Aufprallenergie auf die Prallfläche 971 auf, die so groß ist, dass sie sich beim Aufprall teilen. Aufgrund der konischen Form des Homogenisators 95 verringern sich die Flächenverhältnisse, und die Teilströme 42 werden beschleunigt. Dadurch ist die Aufprallenergie auch noch am in Erstreckungsrichtung 30 unteren Ende 955 ausreichend groß, um kleine Luftbläschen 41 beim Aufprall zu zerteilen.

Beim Durchfließen des Homogenisators 95 wird das Milch-/Luftgemisch 40 daher homogenisiert, indem die Luftbläschen 41 weiter verkleinert werden, so dass sich die einzelnen Bläschengrößen angleichen, und das Milch-/Luftgemisch 40 immer weiter durchmischt wird.

### Bezugszeichen

- Milchbehälter: 1
- Auslassvorrichtung: 2
- Milchleitung: 3
- Absperrventil: 4
- erste Mischkammer: 5
- Milchpumpe: 6
- Rückschlagventil: 7
- Zweite Mischkammer: 8
- Nachbehandlungsvorrichtung: 9
- Gehäuseoberteil: 91
- Gehäuseunterteil: 92
- Gehäuseinnenwand: 921
- Anschlusseinsatz: 93
- Oberteil: 94
- Düse: 941
- Homogenisator: 95
- Einlassbereich: 951
- Auslassbereich: 952
- Verkleinerungsbereich: 953
- Einlassende: 954
- Auslassende: 955
- Eintrittsfläche: 956
- Außenwand: 957
- Dichtung: 96
- Prallkörper: 97
- Prallfläche: 971
- Reihe: 972₁ - 972ᵢ
- Kanallabyrinth: 98
- Prallraum: 981
- Durchlaufkanal: 982
- Rampe: 99
- Zuleitung: 10
- Dampfzuleitung: 11
- Rückschlagventil: 12
- Zweigleitungen: 13, 14
- Luftquelle: 15
- Luftquelle: 16
- Versatz: 17
- Einlass: 20
- Auslass: 21
- Erstreckungs-, Strömungsrichtung: 30
- Umfangsrichtung: 31
- Achse: 32
- Milch-/Luftgemisch: 40
- Luftbläschen: 41
- Teilstrom: 42
- Winkel: α

## Patentansprüche

1. Vorrichtung zum Erzeugen eines Milchschaumes (40) für einen Heiß- und/oder Kaltgetränkeautomaten, insbesondere für einen Kaffeeautomaten, mit einer Milchpumpe (6) zum Fördern des Milchschaumes (40) und einer Nachbearbeitungsvorrichtung (9) für den Milchschaum zum Verändern der Konsistenz des Milchschaumes, **dadurch gekennzeichnet, dass** die Nachbearbeitungsvorrichtung einen Homogenisator (95) aufweist, der zum Verkleinern und Verteilen der Luftblasen (41) des Milchschaumes (40) vorgesehen ist, und der einen Verkleinerungsbereich (953) aufweist, in dem eine Vielzahl von Prallkörpern (97) angeordnet sind, zwischen denen sich ein Kanallabyrinth (98) erstreckt, welches vorgesehen ist, um vom Milch-/Luftgemisch (40) durchströmt zu werden.

2. Vorrichtung nach Anspruch 1, **dadurch gekennzeichnet, dass** die Prallkörper (97) jeweils eine Prallfläche (971) aufweisen, auf die ein Teilstrom (42) des Milchschaumes (40) beim Durchströmen des Kanallabyrinthes (98) aufprallt.

3. Vorrichtung nach einem der vorherigen Ansprüche, **dadurch gekennzeichnet, dass** in einer Erstreckungsrichtung (30) des Homogenisators (95), die die Strömungsrichtung des Milchschaumes (40) ist, jeweils mehrere Prallkörper (97) reihenweise untereinander angeordnet sind.

4. Vorrichtung nach einem der vorherigen Ansprüche, **dadurch gekennzeichnet, dass** die mehreren Prallkörper (97) benachbarter Reihen (972₁ - 972ᵢ) zueinander versetzt angeordnet sind.

5. Vorrichtung nach einem der vorherigen Ansprüche, **dadurch gekennzeichnet, dass** die mehreren Prallkörper (97) einer Reihe (972₁ - 972ᵢ) jeweils voneinander beabstandet sind.

6. Vorrichtung nach einem der vorherigen Ansprüche, **dadurch gekennzeichnet, dass** der Homogenisator (95) sich konzentrisch um eine Achse (32) erstreckt, wobei die mehreren Prallkörper (97) jeder Reihe (972₁ - 972ᵢ) jeweils in Umfangsrichtung (31) gleichmäßig verteilt um die Achse (32) angeordnet sind.

7. Vorrichtung nach einem der vorherigen Ansprüche, **dadurch gekennzeichnet, dass** sich die Prallkörper (95) an ihrem in Erstreckungsrichtung (30) unteren Ende verjüngen.

8. Vorrichtung nach einem der vorherigen Ansprüche, **dadurch gekennzeichnet, dass** der Homogenisator (95) sich in Erstreckungsrichtung (30) verjüngt.

9. Vorrichtung nach einem der vorherigen Ansprüche, **dadurch gekennzeichnet, dass** der Homogenisator (95) einen Einlassbereich (951) aufweist, in dem er kegelstumpfförmig ausgebildet ist und sich in Erstreckungsrichtung (30) verbreitert.

10. Vorrichtung nach einem der vorherigen Ansprüche, **dadurch gekennzeichnet, dass** der Homogenisator (95) einen Auslassbereich (952) aufweist, in dem er kegelstumpfförmig ausgebildet ist und sich in Erstreckungsrichtung (30) verjüngt.

11. Vorrichtung nach einem der vorstehenden Ansprüche, **dadurch gekennzeichnet, dass** die Nachbearbeitungsvorrichtung (9) ein Gehäuseunterteil (92) aufweist, in dem der Homogenisator (95) formschlüssig angeordnet ist.

12. Heiß- und/oder Kaltgetränkeautomat, insbesondere Kaffeeautomat, mit einer Vorrichtung zum Erzeugen eines Milchschaumes (40) nach einem der vorherigen Ansprüche.

13. Verfahren zum Homogenisieren eines Milchschaumes (40) mit Hilfe eines Homogenisators (95) einer Vorrichtung nach einem der Ansprüche 1 - 12, bei dem ein Milch-/Luftgemisch (40) in Teilströmen (42) durch ein Kanallabyrinth (98) des Homogenisators (95) gedrückt wird, wobei mehrfach wiederholt
a) die Teilströme (42) des Milchschaumes (40) jeweils auf Prallflächen (971) aufprallen, wobei sich die Teilströme (42) sowie die Luftbläschen (41) des Milchschaumes (40) teilen, und
b) die geteilten Teilströme dann zu neuen Teilströmen (42) durchmischt werden.

14. Verfahren nach Anspruch 13, **dadurch gekennzeichnet, dass** dabei jeweils benachbarte Teilströme (42) nach dem Aufprallen auf die Prallfläche (971) miteinander durchmischt werden.

15. Verfahren nach einem der Ansprüche 13 - 14, **dadurch gekennzeichnet, dass** das Milch-/Luftgemisch (40) beim Durchströmen des Kanallabyrinthes (98) beschleunigt wird.

## Claims

1. Device for producing a milk foam (40) for a hot and/or cold beverage machine, particularly for a coffee machine, with a milk pump (6) for conveying the milk foam (40) and a reprocessing device (9) for the milk foam for changing the consistency of the milk foam, **characterised in that** the reprocessing device comprises a homogeniser (95), which is provided for reducing and distributing the air bubbles (41) of the milk foam (40) and which has a reducing region (953) in which a plurality of baffle bodies (97) are arranged, between which a channel labyrinth (98), which is provided in order to be flowed through by the milk/air mixture (40), extends.

2. Device according to claim 1, **characterised in that** the baffle bodies (97) each have a baffle surface (971) on which a part flow (42) of the milk foam (42) impinges during flow through the channel labyrinth (98).

3. Device according to one of the preceding claims, **characterised in that** in each instance several baffle bodies (97) are arranged in rows in a length direction (30), which direction is the flow direction of the milk foam (40), of the homogeniser (95).

4. Device according to any one of the preceding claims, **characterised in that** the several baffle bodies (97) of adjacent rows (972₁ - 972ᵢ) are arranged to be offset relative to one another.

5. Device according to any one of the preceding claims, **characterised in that** the several baffle bodies (97) of a row (972₁ - 972ᵢ) are respectively arranged at a spacing from one another.

6. Device according to any one of the preceding claims, **characterised in that** the homogeniser (95) extends concentrically about an axis (32), wherein the several baffle bodies (97) of each row (972₁ - 972ᵢ) are respectively arranged to be uniformly distributed in circumferential direction (31) about the axis (32).

7. Device according to any one of the preceding claims, **characterised in that** the baffle bodies (95) taper at the end thereof lower in length direction (30).

8. Device according to any one of the preceding claims, **characterised in that** the homogeniser (95) tapers in length direction (30).

9. Device according to any one of the preceding claims, **characterised in that** the homogeniser (95) has an inlet region (951) in which it is formed to be frusto-conical and widens in length direction (30).

10. Device according to any one of the preceding claims, **characterised in that** the homogeniser (95) has an outlet region (952) in which it is formed to be frusto-conical and tapers in length direction (30).

11. Device according to any one of the preceding claims, **characterised in that** the reprocessing device (9) comprises a housing lower part (92) in which the homogeniser (95) is mechanically positively arranged.

12. Hot and/or cold beverage machine, particularly coffee machine, with a device for producing a milk foam (40) according to any one of the preceding claims.

13. Method of homogenising a milk foam (40) with the help of a homogeniser (95) of a device according to any one of claims 1 to 12, in which a milk/air mixture (40) is forced in part flows (42) through a channel labyrinth (98) of the homogeniser (95), wherein on multiply repeated occasions
a) the part flows (42) of the milk foam (40) each impinge on baffle surfaces (971), wherein the part flows (42) as well as the air bubbles (41) of the milk foam (40) divide, and
b) the divided part flows are then thoroughly mixed to form new part flows (42).

14. Method according to claim 13, **characterised in that** in each instance respective adjacent part flows (42) are intermixed after impinging on the baffle surface (971).

15. Method according one of claims 13 and 14, **characterised in that** the milk/air mixture (40) is accelerated during throughflow of the channel labyrinth (98).

## Revendications

1. Dispositif permettant de produire une mousse de lait (40) pour un appareil automatique de préparation de boisson chaude et/ou de boisson froide, en particulier pour une machine à café automatique comprenant une pompe à lait (6) pour refouler la mousse de lait (40) et un dispositif de post-traitement (9) de la mousse de lait destiné à modifier la consistance de cette mousse de lait,
**caractérisé en ce que**
le dispositif de post-traitement comporte un homogénéisateur (95) qui est destiné à réduire et répartir les bulles d'air (41) de la mousse de lait (40) et qui comporte une zone de réduction (953) dans laquelle est monté un ensemble de corps d'impact (97) entre lesquels s'étend un canal labyrinthe (98) qui est destiné à être traversé par le mélange lait/air (40).

2. Dispositif conforme à la revendication 1,
**caractérisé en ce que**
les corps d'impact (97) comportent chacun une surface d'impact (971) que vient frapper un flux partiel (42) de la mousse de lait (40) lors de son passage dans le canal labyrinthe (98).

3. Dispositif conforme à l'une des revendications précédentes,
**caractérisé en ce que**
dans la direction d'extension (30) de l'homogénéisateur (95) correspondant à la direction d'écoulement de la mousse de lait (40) sont respectivement montés plusieurs corps d'impact (97) en rangées les uns au dessous des autres.

4. Dispositif conforme à l'une des revendications précédentes,
**caractérisé en ce que**
les corps d'impact (97) de rangée (972₁-972ᵢ) voisines sont décalés les uns par rapport aux autres.

5. Dispositif conforme à l'une des revendications précédentes,
**caractérisé en ce que**
les corps d'impact (97) d'une rangée (972₁-972ᵢ) sont respectivement situés à distance les uns des autres.

6. Dispositif conforme à l'une des revendications précédentes,
**caractérisé en ce que**
l'homogénéisateur (95) s'étend concentriquement autour d'un axe (32), les corps d'impact (97) de chaque rangée (972₁-972ᵢ) étant respectivement disposés autour de cet axe (32) en étant uniformément répartis dans la direction périphérique (31).

7. Dispositif conforme à l'une des revendications précédentes,
**caractérisé en ce que**
les corps d'impact (95) s'amincissent à leur extrémité inférieure dans la direction d'extension (30).

8. Dispositif conforme à l'une des revendications précédentes,
**caractérisé en ce que**
l'homogénéisateur (95) s'amincit dans la direction d'extension (30).

9. Dispositif conforme à l'une des revendications précédentes,
**caractérisé en ce que**
l'homogénéisateur (95) comprend une zone d'entrée (951) dans laquelle il est réalisé en forme de tronc de cône et s'élargit dans la direction d'extension (30).

10. Dispositif conforme à l'une des revendications précédentes,
**caractérisé en ce que**
l'homogénéisateur (95) comprend une zone de sortie (952) dans laquelle il est réalisé en forme de tronc de cône et s'amincit dans la direction d'extension (30).

11. Dispositif conforme à l'une des revendications précédentes,
**caractérisé en ce que**
le dispositif de post-traitement (9) comprend une partie inférieure de boîtier (92) dans laquelle est monté l'homogénéisateur (95) par une liaison par la forme.

12. Machine automatique de préparation de boisson chaude ou de boisson froide, en particulier, machine à café automatique comprenant un dispositif de production d'une mousse de lait (40) conforme à l'une des revendications précédentes.

13. Procédé permettant d'homogénéiser une mousse de lait (40) à l'aide d'un homogénéisateur (95) d'un dispositif conforme à l'une des revendications 1 à 12, selon lequel un mélange lait / air (40) est comprimé dans des flux partiels (42) au travers d'un canal labyrinthe (98) de l'homogénéisateur (95), et, de façon plusieurs fois répétées :
a) les flux partiels (42) de la mousse de lait (40) frappent respectivement des surfaces d'impact (971), les flux partiels (42) et les bulles d'air (41) de la mousse de lait (40) se séparant, et
b) les flux partiels séparés sont ensuite mélangés en de nouveaux flux partiels (42).

14. Procédé conforme à la revendication 13,
**caractérisé en ce que**,
des flux partiels (42) respectivement voisins sont mélangés entre eux après qu'ils aient frappé les surfaces d'impact (971).

15. Procédé conforme à l'une des revendications 13 à 14,
**caractérisé en ce que**
le mélange lait / air (40) est accéléré au cours de son passage dans le canal labyrinthe (98).
